(19) Europäisches Patentamt
European Patent Office
Office européen des brevets

(11) **EP 1 432 259 A1**

(12) **EUROPÄISCHE PATENTANMELDUNG**

(43) Veröffentlichungstag:
**23.06.2004 Patentblatt 2004/26**

(51) Int Cl.⁷: **H04Q 7/36**, H04Q 7/38

(21) Anmeldenummer: 02028342.0

(22) Anmeldetag: **17.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(71) Anmelder: **SIEMENS AKTIENGESELLSCHAFT 80333 München (DE)**

(72) Erfinder:
• **Ball, Carsten, Dr.**
 **81373 München (DE)**
• **Herr, Helmut, Dr.**
 **82024 Taufkirchen (DE)**
• **Ivanov, Kolio, Dr.**
 **81369 München (DE)**

(54) **Verfahren zur Kanalzuweisung in einem Funkkommunikationssystem**

(57) Zur Kanalzuweisung in einem zellularen Funkkommunikationssystem für eine Verbindung zwischen einer Mobilstation und einer Basisstation wird derjenige Kanal bestimmt, für den Gleichkanalstörungen und Nachbarkanalstörungen aus benachbarten Zellen und Nachbarkanalstörungen aus derselben Zelle optimiert sind, wobei die in derselben Zelle und in den benachbarten Zellen durch aktive Mobilstationen benutzten Kanäle berücksichtigt werden. Bei der Kanalzuweisung können zusätzlich die Position von aktiven Mobilstationen innerhalb der jeweiligen-Zellen berücksichtigt werden und/ oder die Interferenz-Eliminierungs-Fähigkeiten von Netzwerk und Teilnehmerstationen.

FIG 2

EP 1 432 259 A1

**Beschreibung**

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Die Funkschnittstelle wird dabei in Kanäle organisiert, die unterscheidbar sind und die einzelnen Teilnehmern zugewiesen werden.

In dem bekannten GSM-Mobilfunksystem, sowie dessen Weiterentwicklung mit einem Paketdatendienst GPRS beziehungsweise EGPRS, deren Architektur zum Beispiel in B. Walke "Mobilfunknetze und ihre Protokolle", Band 1, Teubner-Verlag Stuttgart, 1998, Seite 138 bis 151, sowie Seite 295 bis 311 beschrieben ist, wird ein Kanal durch einen schmalbandigen Frequenzbereich und einen Zeitschlitz gebildet. Da sich ein Teilnehmersignal in einem Kanal in Frequenz und Zeit von den übrigen Teilnehmersignalen unterscheidet, kann die Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Da in einem Mobilfunknetz nur eine begrenzte Anzahl unterschiedlicher Kanäle zur Verfügung steht, wird der Bereich, der von dem Mobilfunknetz bedient werden soll, in Zellen eingeteilt. Jeder Zelle wird eine Untermenge unterschiedlicher Kanäle zugeordnet. Gleiche Kanäle können in räumlich entfernten Zellen wiederbenutzt werden. Der Abstand, in dem gleiche Kanäle wiederbenutzt werden, bestimmt einerseits die Kapazität des Mobilfunksystems, und andererseits die Störsicherheit. Im GSM-System, in dem Kanäle unter Anderem durch unterschiedliche Frequenzen unterschieden werden, wird dieser Abstand als "Frequenzwiederholabstand" oder Reuse bezeichnet. Im Hinblick auf eine möglichst große Kapazität des Mobilfunknetzes ist es vorteilhaft, einen kleinen Abstand zu wählen, im Hinblick auf eine Störsicherheit ist es vorteilhaft, einen möglichst großen Abstand zu wählen. Bezüglich dieser widerstrebenden Anforderungen muss daher ein Kompromiss gefunden werden.

Es gibt GSM Netze, die in einem 1:1 Reuse betrieben werden, d.h. jede Frequenz wird in jeder Zelle verwendet. Man verwendet jedoch ein Frequenzsprungverfahren mit unterschiedlichen Frequenzsprung-Systemen pro Funkverbindung, so dass je nach Last-Zustand mehr oder weniger Burst-Kollisionen auftreten. In diesem Fall wird ein Kanal durch einen Zeitschlitz und ein Frequenzsprung-System definiert.

Störungen treten einerseits auf durch Mobilfunkteilnehmer, die in einer anderen Zelle denselben Kanal benutzen, sogenannte Gleichkanalstörungen, andererseits durch Mobilfunkteilnehmer, die in derselben oder in benachbarten Zellen einen benachbarten Kanal benutzen, sogenannte Nachbarkanalstörungen.

In der Literatur findet sich zum Thema Kanalzuweisung die von NOKIA vorgeschlagene DFCA-Lösung (Dynamic Frequency and Channel Allocation), siehe Halonen et al, "GSM, GPRS and EDGE Performance", Wiley 2002, S. 299ff.

Der Erfindung liegt das Problem zugrunde, ein Verfahren zur Kanalzuteilung in einem Mobilfunksystem anzugeben, mit dem einerseits die erreichbare Kapazität des Funkkommunikationssystems und andererseits die Störsicherheit vergrößert werden kann. Insbesondere sollen gegenüber DFCA durch deutliche Performance-Gewinne erreicht werden.

Dieses Problem wird erfindungsgemäß gelöst durch ein Verfahren gemäß Anspruch 1. Weitere Ausgestaltungen der Erfindung gehen aus den übrigen Ansprüchen hervor.

In dem erfindungsgemäßen Verfahren wird zur Kanalzuweisung für eine Verbindung in einer Zelle zwischen einer Mobilstation und einer Basisstation derjenige Kanal bestimmt, für den Gleichkanalstörungen und Nachbarkanalstörungen aus benachbarten Zellen und Nachbarkanalstörungen aus derselben Zelle eine vorgegebene Schwelle nicht überschreiten, wobei die in derselben Zelle und in den benachbarten Zellen durch aktive Mobilstationen benutzten Kanäle berücksichtigt werden. In dem erfindungsgemäßen Verfahren wird somit von einer starren Zuordnung bestimmter Kanäle zu bestimmten Zellen abgewichen. Es wird vielmehr betrachtet, welche Kanäle gerade belegt sind und wie sich diese Kanalbelegung in der betrachteten Zelle und in den benachbarten Zellen auf die neu aufzubauende Verbindung bezüglich der Störungen auswirken. Für die neu aufzubauende Verbindung wird dann derjenige Kanal ausgewählt, für den eine tolerierbare Störung zu erwarten ist. Das kann z. B. derjenige Kanal mit der geringsten Störung sein oder ein Kanal, für den eine vom jeweiligen Dienst abhängige Schwelle nicht überschritten wird. Durch Berücksichtigung der vom jeweiligen Dienst abhängigen Schwelle wird sichergestellt, dass die Dienste-Anforderung des betreffenden Teilnehmers erfüllt wird.

Bei der Betrachtung der zu erwartenden Störungen werden nur die Nachbarkanalstörungen aus der betrachteten Zelle und den benachbarten Zellen sowie Gleichkanalstörungen aus benachbarten Zellen herangezogen. Gleichkanalstörungen und Nachbarkanalstörungen aus weiter entfernteren Zellen können über eine Interferenz-Matrix gewichtet berücksichtigt werden. Auf diese Weise wird der neu aufzubauenden Verbindung der Kanal zugewiesen, für den eine noch tolerierbare Störung zu erwarten ist. Andererseits werden die zur Verfügung stehenden Kanäle bei optimaler Störsicherheit bestmöglichst ausgenutzt. Dadurch wird die Kapazität des Funkkommunikationssystems erhöht.

In die Berechnung der Kanalzuweisung können zusätzlich die Interferenz-Eliminierungs-Möglichkeiten zumm Beispiel durch Interference Cancellation von Netzwerk und Mobilstation einfliessen.

Als benachbarte Zellen können sektorförmige Zellen betrachtet werden, die von derselben Sektorenantenne abgedeckt werden. Es können auch Zellen sein, die von unterschiedlichen Antennen abgedeckt werden. Sind die Zellen unterschiedlichen Basisstationssteuerungen zugeordnet, muss sichergestellt sein, dass Informationen über in den einzelnen Zellen aktive Kanäle in einer zentralen Instanz verfügbar sind.

Vorzugsweise werden bei der Kanalzuweisung die Positionen von aktiven Mobilstationen innerhalb der benachbarten Zellen d.h. die Ortsinformationen der aktiven Mobilstationen berücksichtigt. Auf diese Weise kann die Kapazität des Funkkommunikationssystems weiter erhöht werden, weil die Positionen der belegten Kanäle innerhalb der Zellen berücksichtigt werden.

Ferner können zusätzlich die zur Verfügung stehenden Funkparameter und Messwerte verwendet werden. Dazu gehören Power Control Information, Abstand bzw. Timing Advance usw. Es kann beispielsweise berücksichtigt werden, ob eine in einer Nachbarzelle aktive Mobilstation mit geringer oder hoher Leistung sendet.

Es liegt im Rahmen der Erfindung, die Zellen mittels Strahlformung in Teilbereiche zu unterteilen. In diesem Fall wird vorzugsweise aus der Strahlformung die Position der aktiven Mobilstationen innerhalb der benachbarten oder derselben Zelle abgeleitet. Für die Bestimmung der Position der aktiven Mobilstationen ist gemäß dieser Ausführungsform keine zusätzliche Positionsbestimmung erforderlich. Alternativ kann im Falle von Zellen ohne Strahlformungsteilbereiche die Position aus den Funkparametern bestimmt und/oder Lokalisierungsinformationen (beispielsweise LCS) genutzt werden.

Im Hinblick darauf, dass die Gleichkanalstörungen aus benachbarten Zellen, die Nachbarkanalstörungen aus benachbarten Zellen und die Nachbarkanalstörungen aus derselben Zelle unterschiedlichen Einfluss auf die Gesamtstörung einer Verbindung haben, ist es vorteilhaft, diese mit unterschiedlichen Gewichten zu berücksichtigen. Insbesondere Netzwerke und Teilnehmerstationen mit Interferenz-Eliminierungs-Möglichkeit können eine gewisse Anzahl von Störquellen individuell dämpfen, was berücksichtigt werden kann.

Das Verfahren ist insbesondere anwendbar in einem Funkkommunikationssystem, in dem jeder Kanal durch einen Zeitschlitz und eine Frequenz definiert ist. Es ist somit insbesondere anwendbar in einem Funkkommunikationssystem entsprechend dem GSM-Standard, GPRS, EDGE und beim TDMA-Standard. Das Verfahren eignet sich auch für alle FDMA Systeme sowie für Systeme basierend auf CDMA (z.B. UMTS, TD-SCDMA), wobei hier ein Kanal durch einen Code bzw. ein Code-Zeitschlitzpaar definiert ist.

Ist ein Kanal durch einen Zeitschlitz und eine Frequenz bestimmt, so wird bei der Ermittlung des zuzuweisenden Kanals für einen vorgegebenen Zeitschlitz für jeden unbenutzten Frequenzwert berücksichtigt, ob derselbe Frequenzwert in den benachbarten Zellen benutzt wird, und ob benachbarte Frequenzwerte in den benachbarten Zellen oder derselben Zelle verwendet werden. Für die Kanalzuweisung wird derjenige Frequenzwert verwendet, für den derselbe Frequenzwert in möglichst wenigen benachbarten Zellen und/oder benachbarte Frequenzwerte in möglichst wenigen benachbarten Zellen oder derselben Zelle verwendet werden. Bei zusätzlicher Anwendung von Interferenz-Eliminierung kann hierbei eine gewisse wohldefinierte Anzahl von Kollisionen eingerechnet werden.

Dabei liegt es im Rahmen der Erfindung, einer Nachbarzelle, in der derselbe Frequenzwert benutzt wird, einen ersten Wert, einer benachbarten Zelle, in der ein benachbarter Frequenzwert benutzt wird, einen zweiten Wert und derselben Zelle, in der ein benachbarter Frequenzwert benutzt wird, einen dritten Wert zuzuordnen. Zur Beurteilung der Störung wird nachfolgend die Summe aus den zugeordneten ersten Werten, zweiten Werten und dritten Werten gebildet. Es wird der Kanal mit derjenigen Frequenz zugewiesen, für den die Summe die vorgegebene Schwelle nicht überschreitet. Dabei wird benachbarten Zellen, in denen weder derselbe Frequenzwert benutzt wird, noch ein benachbarter Frequenzwert benutzt wird, kein Wert zugeordnet. Ebenso wird derselben Zelle kein Wert zugeordnet, falls in dieser kein Kanal mit einer benachbarten Frequenz aktiv ist. Auf diese Weise ist die Höhe der Summe ein Maß dafür, wieviele potentielle (und evtl. nicht elimierbare) Störer sich in derselben Zelle beziehungsweise benachbarten Zellen befinden.

Diese Werte können als Werte bzw. Kosten einer Zielfunktion anhand der existierenden Funkparamter, der Positionen von Zellen und Teilnehmern, der Interferenz-Matrizen sowie der Interferenz-Eliminierungsfähigkeiten von Netz und Mobilstation bestimmt und modifiziert werden.

Es liegt im Rahmen der Erfindung, eine Schwelle vorzugeben, mit der die Summe verglichen wird. Liegt die Summe oberhalb der vorgegebenen Schwelle, wird kein Kanal zugewiesen. Auf diese Weise wird eine Laststeuerung des Funkkommunikationssystem bewirkt. Durch Einführen der Schwelle wird eine bestimmte Störsicherheit gewährleistet. Diese geht natürlich auf Kosten der Kapazität des Funkkommunikationssystems. Bei Überschreiten der Schwelle können zudem bekannte Last-Abwehr-Mechanismen greifen, z.B. Handover in weniger belastete Nachbarzellen.

Bei Dualband-Zellen wird das Verfahren für jedes einzelne Band durchgeführt. Je nach Verfügbarkeit der Resourcen werden unterschiedliche Schwellen gesetzt. Bei Dual-Band Zellen wird vorzugsweise auch ein Load-Balancing verwendet, d.h. der Teilnehmer wird dem Band mit der geringeren relativen Last zugewiesen.

Im Folgenden wird die Erfindung anhand eines Ausführungsbeispiels, das in den Figuren dargestellt ist, näher erläutert.

Figur 1 zeigt einen Ausschnitt aus der Architektur eines Funkkommunikationssystems.

Figur 2 zeigt ein Kanalbelegungsschema für drei Zellen und zwölf Kanäle.

Figur 3 zeigt ein Kanalbelegungsschema für drei Zellen und zwölf Kanäle unter Berücksichtigung der Positionen innerhalb der Zellen.

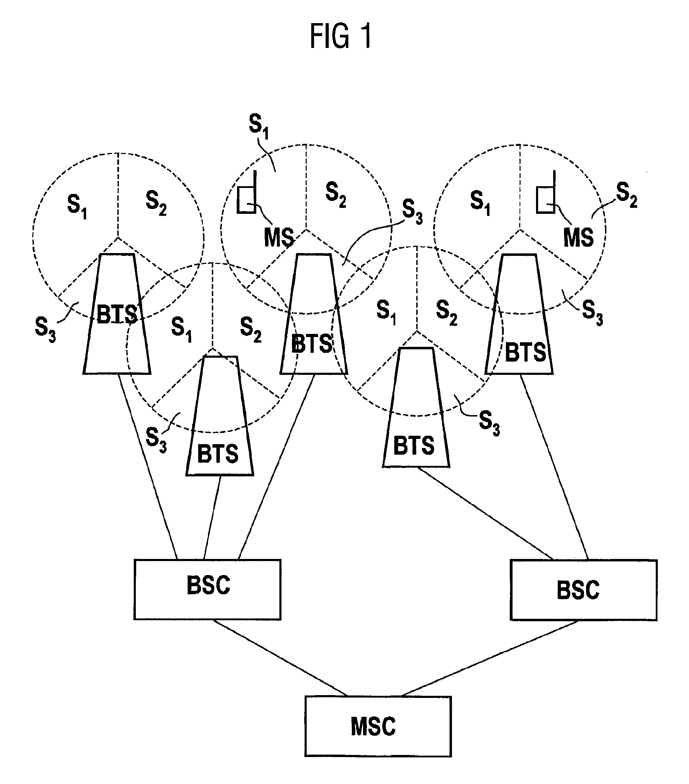

Ein Funkkommunikationssystem umfasst eine Vielzahl von Basisstationen BTS (siehe Figur 1). Jede Basisstation BTS ist mit einer Basisstationssteuerung BSC verbunden. Einer Basisstationssteuerung BSC können dabei mehrere Basisstationen BTS zugeordnet sein. Die Basisstationssteuerungen BSC stellen eine Verbindung zu einer Mobilvermittlungsstation MSC dar. Die Mobilvermittlungsstation MSC stellt eine Verbindung zu anderen Mobilvermittlungsstationen und zu anderen Vermittlungsstellen, zum Beispiel zu Paketdatendiensten oder zum Festnetz dar.

Die Basisstationen BTS sind Funkstationen, über die eine Funkverbindung zu einer Mobilstation MS aufgebaut werden kann. Heutzutage gebräuchliche Basisstationen BTS sind mit einer Sektorantenne ausgerüstet, über die sie in drei unabhängige sektorförmige Zellen S1, S2, S3 ausstrahlen. Die sektorförmigen Zellen S1, S2, S3 stellen benachbarte Zellen dar.

Zum Aufbau einer Verbindung zwischen der Mobilstation MS und der Basisstation BTS wird der Verbindung ein Kanal zugewiesen. Im GSM-System wird der Kanal durch die Angabe eines Zeitschlitzes und einer Frequenz definiert. Im GSM-System werden der Zeitschlitz durch Angabe einer TDMA (Time Division Multiple Access)-Rahmen-Nummer und die Nummer des Zeitschlitzes in dem betreffenden Rahmen und die Frequenz durch die Angabe der für die Verbindungen zu Mobilstationen zur Verfügung stehenden Frequenzen MA, sowie einen Versatz MAIO in der Frequenz bzw. dem Frequenzsprung-System angegeben.

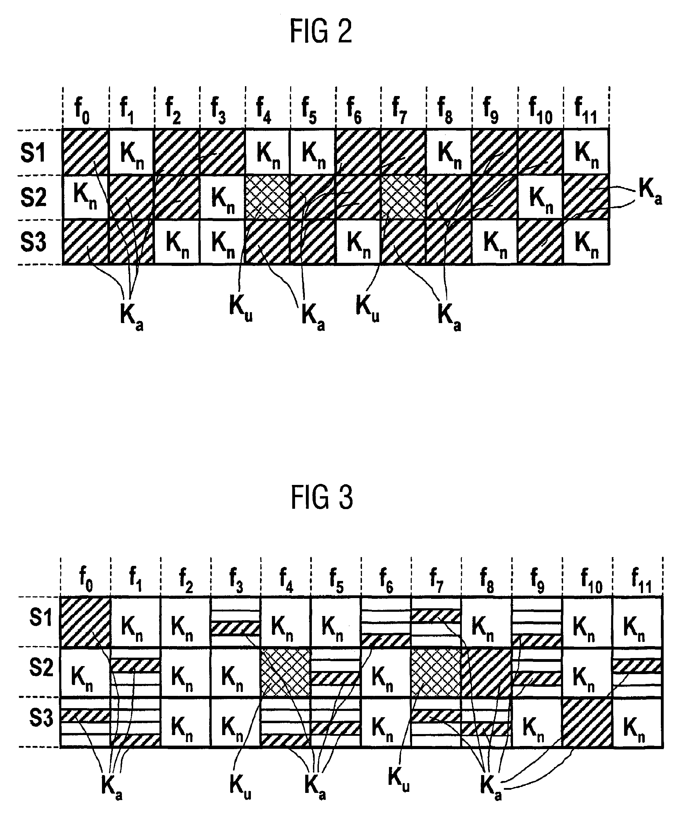

Zur Zuweisung eines Kanals für eine aufzubauende Verbindung wird in einem ersten Ausführungsbeispiel des erfindungsgemäßen Verfahrens ein Kanalbelegungsschema für drei einander benachbarte Sektoren betrachtet (siehe Figur 2). In dem Kanalbelegungsschema sind tabellenförmig die betrachteten Sektoren und die zur Verfügung stehenden Kanäle dargestellt. Die Zeilen der Tabelle sind dabei den betrachteten Sektoren, einem ersten Sektor S1, einem zweiten Sektor S2 und einem dritten Sektor S3 zugeordnet. Die Spalten der Tabelle sind den Kanälen, die durch die Kanalparameter $F_0$, $F_1$, $F_2$, $F_3$, $F_4$, $F_5$, $F_6$, $F_7$, $F_8$, $F_9$, $F_{10}$, sowie $F_{11}$ bezeichnet sind. Die Kanalparameter sind zum Beispiel Frequenzen oder Versatzzahlen zu einem Frequenzwert. In dem Kanalbelegungsschema sind in dem jeweiligen Sektor $S_i$ aktive Kanäle $K_a$ durch Schraffur gekennzeichnet. Nicht aktive Kanäle in den Sektoren $S_i$ sind durch weisse Felder $K_n$ gekennzeichnet. Zu untersuchende Kanäle $K_U$ sind durch gekreuzte Schraffur gekennzeichnet. Für die zu untersuchenden Kanäle $K_U$ wird beurteilt, auf welchem der zu untersuchenden Kanäle $K_U$ eine Verbindung die geringsten Störungen erfährt.

Zur Beurteilung der Störungen durch Interferenz werden die möglichen Störungen folgendermaßen klassifiziert: Eine Gleichkanalstörung aus einem Nachbarsektor liegt vor, wenn im Nachbarsektor der gleiche Kanal mit der gleichen Frequenz aktiv ist. Eine Nachbarkanalstörung aus einem Nachbarsektor liegt vor, wenn im Nachbarsektor ein benachbarter Kanal aktiv ist, das heisst, ein Kanal mit einem Kanalparameter $f_{j-1}$ oder $f_{j+1}$, falls in dem zu untersuchenden Kanal der Kanalparameter $f_j$ belegt ist. Eine Nachbarkanalstörung aus dem eigenen Sektor liegt vor, wenn in dem eigenen Sektor ein benachbarter Kanal aktiv ist. Die unterschiedlichen möglichen Störungen haben unterschiedlich schwerwiegende Auswirkungen. Diese Unterschiede werden durch Zuweisung von unterschiedlichen Gewichtsfaktoren berücksichtigt. So wird beispielsweise den Nachbarkanalstörungen aus dem Nachbarsektor der Wert 1, den Nachbarkanalstörungen aus dem eigenen Sektor der Wert 3 und den Gleichkanalstörungen aus dem Nachbarsektor der Wert 5 zugewiesen.

Betrachtet man die zu erwartenden Störungen für den zu untersuchenden Kanal $K_U$ im zweiten Sektor S2 mit dem Kanalparameter $F_4$, so ergibt sich 1+1+3+5=10.

Für den zu untersuchenden Kanal $K_U$ im zweiten Sektor S2 mit dem Kanalparameter $F_7$ ergibt sich 1+1+3+3+5+5=18.

Das heisst, für den zu untersuchenden Kanal $K_U$ im zweiten Sektor S2 mit dem Kanalparameter $F_7$ wird eine größere Störung erwartet als für den zu untersuchenden Kanal $K_U$ im zweiten Sektor S2 mit dem Kanalparameter $F_4$. Der Verbindung wird somit der zu untersuchende Kanal $K_U$ im zweiten Sektor S2 mit dem Kanalparameter $F_4$ zugewiesen.

Die Gewichtsfaktoren bestimmen das Verhalten des Algorithmus. Die Werte der Gewichtsfaktoren müssen daher so gewählt werden, dass sie der Schwere der Interferenzstörungen entsprechend ansteigen. Die Werte der Gewichtsfaktoren werden beispielsweise aus Messungen der Funkparameter, der gegenseitigen Zellstörungen beispielsweise in der Form einer Interferenz-Matrix, der Interferenz-Eliminierungsmöglichkeiten von Netzwerk und Teilnehmerstationen und den Positionen von Zellen und Teilnehmerstationen soweit vorhanden hergeleitet und bestimmt.

In einem zweiten Ausführungsbeispiel wird das Verfahren angewendet zur Kanalzuweisung in einem Funkkommunikationssystem, in dem die Sektoren in Subsektoren unterteilt werden. Dabei wird unter Verwendung stärker bündelnder Antennen das ausgestrahlte Funkfeld auf den Teilbereich des Sektors konzentriert, in dem sich der Teilnehmer aufhält. Eine neu aufzubauende Verbindung wird zunächst mit einem Funkstrahl bedient, der den gesamten Sektor überdeckt. Nachfolgend, wenn auf Grund von Feldstärkemessungen ermittelt wird, wo sich der Teilnehmer innerhalb des Sektors befindet, wird der Funkstrahl gebündelt.

Zur Bestimmung eines zuzuweisenden Kanals wird wiederum ein Kanalbelegungsschema betrachtet (siehe Figur 3). Es sind tabellenförmig die in einem Sektor oder einem Subsektor aktiven Kanäle aufgetragen. Den Zeilen sind ein erster Sektor S1, ein zweiter Sektor S2 und ein dritter Sektor S3 zugeordnet. Den Spalten sind Kanalparameter $F_0$, $F_1$, $F_2$, $F_3$, $F_4$, $F_5$, $F_6$, $F_7$, $F_8$, $F_9$, $F_{10}$ und $F_{11}$ zugeordnet. Als Kanalparameter können zum Beispiel die im GSM-System gebräuchlichen Frequenzversatzzahlen verwendet werden.

In dem Kanalbelegungsschema sind aktive Kanäle $K_a$ schraffiert dargestellt. Dabei ist für Verbindungen, für die noch keine Umschaltung auf einen Subsektor stattgefunden hat, die gesamte Sektorfläche schraffiert. Für Verbindungen, bei denen eine Umschaltung auf einen Subsektor stattgefunden hat, wird lediglich der Subsektor schraffiert. Nicht aktive Kanäle $K_n$ sind durch weisse Felder markiert.

Im Folgenden werden als zu untersuchende Kanäle $K_U$ der zweite Sektor S2 mit dem Kanalparameter $F_4$ sowie der zweite Sektor S2 mit dem Kanalparameter $F_7$ betrachtet. Die zu untersuchenden Kanäle $K_U$ sind durch eine gekreuzte Schraffur kenntlich gemacht.

Die Gewichtsfaktoren sind wie im ersten Ausführungsbeispiel zugewiesen. Hinzu kommt, dass für Subsektoren Zusatzfaktoren eingeführt werden. Es wird für den benachbarten Subsektor der Zusatzfaktor 1, für den nächsten Subsektor der Zusatzfaktor 0,7, für den dritten Subsektor der Zusatzfaktor 0,4 und für den vierten, am weitesten entfernten Subsektor der Zusatzfaktor 0,1 definiert. Diese beispielshaften Zusatzfaktoren finden Anwendung bei der Beurteilung der Störung aus Nachbarsektoren. Bei der Beurteilung der Störung aus dem eigenen Sektor wird dagegen jeder Subsektor als gleich starke Störung betrachtet.

Für den zu untersuchenden Kanal $K_U$ im zweiten Sektor S2 mit dem Kanalparameter $F_4$ ergibt sich somit

$$1 \times 0{,}7 + 1 \times 0{,}4 + 3 + 5 \times 0{,}1 = 4{,}6.$$

Für den zu untersuchenden Kanal $K_U$ im zweiten Sektor S2 mit dem Kanalparameter $F_7$ ergibt sich

$$1 \times 1 + 1 \times 0{,}4 + 3 + 3 + 5 \times 0{,}7 + 5 \times 0{,}4 = 12{,}9.$$

Bei dieser Betrachtungsweise wird berücksichtigt, wo sich ein Teilnehmer mit einem aktiven Kanal $K_a$ in einem Nachbarsektor befindet. Je nach Aufenthaltsort unterscheidet sich die Wirkung der Störung.

Zusätzlich kann die Möglichkeit, Störer durch Interferenz-Eliminierung zu berücksichtigen, oder die aufgrund von Funkparametern, zum Beispiel der Sendeleistung oder der aus einem Timing Advance Wert abgeleiteten Entfernung Kanalzuweisung berücksichtigt werden. Interferenz-Eliminierungsmöglichkeiten sowie die Einrechnung von Funkparametern und Interferenz-Matrizen wurde in obigen Rechenbeispielen der Übersicht wegen noch nicht berücksichtigt.

Die Betrachtung wird für den gesamten zweiten Sektor S2 durchgeführt. Beim Umschalten auf den dem Teilnehmer entsprechenden Subsektor im zweiten Sektor S2 bleibt die Zuweisung erhalten. Durch die Umschaltung auf den konkreten Subsektor verringert sich die Störung durch Interferenz.

Das obige Ausführungsbeispiel lässt sich jetzt ausgehend von einem Basisstationsstandort auch auf die benachbarten Standorte bzw. Zellen bzw. sogar netzweit ausdehnen.

Das erfindungsgemäße Verfahren wurde mit Hilfe eines Simulationsprogramms erprobt. In dem Simulationsprogramm werden für ein GSM-Netz eine Reihe von Qualitätsparametern berechnet, wobei realistische Ausbreitungsbedingungen angenommen werden. Es wird beispielsweise die Blockierungswahrscheinlichkeit, die Wahrscheinlichkeit für schlechte Qualität eines Gesprächs, die Wahrscheinlichkeit von Bitfehlern und Ähnliches berechnet. Aus diesen Daten wird nachfolgend die Kapazität des Funkkommunikationsnetzes und eines Standortes bestimmt. Als Kapazität wird dabei der Verkehrswert in Erlang bestimmt, der von einem Standort bewältigt werden kann, ohne dass die Qualität eine vorgegebene Schwelle unterschreitet. Der Wert wird auf die Anzahl der insgesamt zur Verfügung stehenden Zeitschlitze bezogen. Dadurch ist er unabhängig von der Zahl der Trägerfrequenzen. Der so gewonnene Wert wird in der Literatur vielfach als "Erlang Fractional Load" bezeichnet. Bei der Simulation wurden folgende Netzparameter vorgegeben:

- GSM-Netz mit 72 Drei-Sektorstandorten (216 Zellen)
- Subsektorierung mit vier Subsektoren in allen Fällen
- 12 Frequenzen für reine Verkehrskanäle
- An jedem Standort wird derselbe Satz von Frequenzen benutzt, das heisst, Frequenzwiederholfaktor 1x1
- Anzahl der Frequenzen für Verkehrskanäle (TCH-Frequenzen) pro Zelle: 6 beziehungsweise 7

Simulationsparameter:

- Anzahl der Gespräche in der Simulation 100.000
- Gewichtsfaktoren 1 für Nachbarkanalstörung aus dem Nachbarsektor, 3 für Nachbarkanalstörung aus dem eigenen Sektor, 5 für Gleichkanalstörung aus dem Nachbarsektor
- Zusatzfaktoren für Subsektoren: 1; 0,7; 0,4; 0,1
- Interferenzschwelle für gewichtete Summe: 9, das heisst, ein zu untersuchender Kanal wird nur zugewiesen, wenn sich ein Summenwert < 9 ergibt, andernfalls wird das Gespräch abgewiesen.

Simulationsergebnis:

| Anzahl der TCH-Frequenzen | Kapazität 1 ('Erlang Fractional Load') | Kapazität 2 ('Erlang Fractional Load') |
|---|---|---|
| 6 TCH-Freq. | 31,3 % | 38,6 % |
| 7 TCH-Freq. | 41,9 % | 50,7 % |

Kapazität 1 ist der Wert, der sich ohne Gewichtung der Subsektoren, das heisst, ohne Einbeziehung der Ortsinformationen, wie anhand des ersten Ausführungsbeispiels erläutert, ergibt.

Kapazität 2 ist das Ergebnis, das sich unter Einbeziehung der Ortsinformationen in den Kanalalgorithmus, wie er anhand des zweiten Ausführungsbeispiels erläutert wurde, ergibt.

Es zeigt sich, dass die Berücksichtigung der Ortsinformation, wie anhand des zweiten Ausführungsbeispiels erläutert, eine Steigerung der Kapazität von 23 bis 25% ergibt.

Eine Berücksichtigung der Interferenz-Eliminierungs-Möglichkeiten bei Netzwerk und Teilnehmerstationen sowie die Berücksichtigung der Kanalbelegungen in unterschiedlichen Zellen sowie deren gegenseitige Wechselwirkung sowie die Berücksichtigung weiterer Funkparameter lassen nochmals weitaus mehr Kollisionen zwischen Kanälen in unterschiedlichen Zellen zu. Damit kann der Kanal-Reuse im Netz nochmals deutlich gesteigert werden, so dass die gesamte Netz-Kapazität drastisch gesteigert wird.

**Patentansprüche**

1. Verfahren zur Kanalzuweisung in einem zellularen Funkkommunikationssystem,
   bei dem zur Kanalzuweisung für eine Verbindung in einer Zelle zwischen einer Mobilstation und einer Basisstation derjenige Kanal bestimmt wird, für den Gleichkanalstörungen und Nachbarkanalstörungen aus benachbarten Zellen und Nachbarkanalstörungen aus derselben Zelle eine vorgegebene Schwelle nicht überschreiten, wobei die in derselben Zelle und in den benachbarten Zellen durch aktive Mobilstationen benutzten Kanäle berücksichtigt werden.

2. Verfahren nach Anspruch 1,
   bei dem bei der Kanalzuweisung die Positionen von aktiven Mobilstationen innerhalb von benachbarten Zellen werden.

3. Verfahren nach einem der Anspruch 2,

   - bei dem die Zellen mittels Strahlformung von Antennen in Teilbereiche unterteilt werden,
   - bei dem aus der Strahlformung die Positionen der aktiven Mobilstationen innerhalb der jeweiligen Zellen abgeleitet werden.

4. Verfahren nach Anspruch 2,

   - bei dem anhand von Funkparametern oder unter Zuhilfenahme von Lokalisierungs-Diensten die Position der aktiven Mobilstationen bestimmt wird.

5. Verfahren nach einem der Ansprüche 1 bis 4,
   bei dem Interferenz-Eliminierungsfähigkeiten von Mobilstation und/oder Basisstation berücksichtigt werden.

6. Verfahren nach einem der Ansprüche 1 bis 5,

bei dem Störungen und/oder Wechselwirkungen zwischen verschiedenen Zellen als Interferenz-Matrix gewichtet in die Berechnung eingehen.

7. Verfahren nach einem der Ansprüche 1 bis 6,
bei dem zur Bestimmung der Kanalzuweisung ein Regel-System betrachtet wird, in dem die Positionen der aktiven Mobilstationen und Zellen, die Interferenz-Eliminierung, die Funkparameter der aktiven Mobilstationen und der Basisstationen, die Gleichkanalstörungen aus benachbarten Zellen, die Nachbarkanalstörungen aus benachbarten Zellen und die Nachbarkanalstörungen aus derselben Zelle mit unterschiedlichen Gewichten berücksichtigt werden.

8. Verfahren nach einem der Ansprüche 1 bis 7,
bei dem der Kanal durch einen Zeitschlitz und eine Frequenz oder ein Frequenzsprung-System oder bei CDMA Systemen durch einen Code definiert ist.

9. Verfahren nach Anspruch 8,
bei dem bei der Ermittlung des Kanals für einen vorgegebenen Zeitschlitz für jeden unbenutzten Frequenzwert berücksichtigt wird, ob derselbe Frequenzwert in den benachbarten Zellen benutzt wird und ob benachbarte Frequenzwerte in den benachbarten Zellen oder in derselben Zelle verwendet werden.

10. Verfahren nach Anspruch 9,

- bei dem einer Nachbarzelle, in der derselbe Frequenzwert benutzt wird, ein erster Wert, einer benachbarten Zelle, in der ein benachbarter Frequenzwert benutzt wird, ein zweiter Wert, derselben Zelle, in der ein benachbarter Frequenzwert benutzt wird, ein dritter Wert zugeordnet wird,
- bei dem zur Beurteilung der Störung die Summe aus den zugeordneten ersten Werten, zweiten Werten und dritten Werten gebildet wird,
- bei dem der Kanal mit derjenigen Frequenz zugewiesen wird, für den die Summe eine vorgegebene Schwelle nicht überschreitet.

11. Verfahren nach Anspruch 10,

- bei dem die Funkparameter und Position der Teilnehmerstationen/Zellen sowie die Interferenz-Eliminierungsfähigkeiten in die ersten, zweiten und dritten Werte eingerechnet werden.

12. Verfahren nach Anspruch 10 oder 11,
bei dem der ermittelte Kanal nur zugewiesen wird, wenn die Summe eine von den Dienste-Anforderungen der Teilnehmer-Station abhängende Schwelle nicht überschreitet.

# FIG 1

## FIG 2

|  | $f_0$ | $f_1$ | $f_2$ | $f_3$ | $f_4$ | $f_5$ | $f_6$ | $f_7$ | $f_8$ | $f_9$ | $f_{10}$ | $f_{11}$ |
|----|----|----|----|----|----|----|----|----|----|----|----|----|
| S1 |  | $K_n$ |  |  | $K_n$ | $K_n$ |  |  | $K_n$ |  |  | $K_n$ |
| S2 | $K_n$ |  |  | $K_n$ |  |  |  |  |  |  | $K_n$ |  |
| S3 |  |  | $K_n$ | $K_n$ |  |  | $K_n$ |  |  | $K_n$ |  | $K_n$ |

$K_a$  $K_u$  $K_a$  $K_u$  $K_a$

$K_a$

## FIG 3

|  | $f_0$ | $f_1$ | $f_2$ | $f_3$ | $f_4$ | $f_5$ | $f_6$ | $f_7$ | $f_8$ | $f_9$ | $f_{10}$ | $f_{11}$ |
|----|----|----|----|----|----|----|----|----|----|----|----|----|
| S1 |  | $K_n$ | $K_n$ |  | $K_n$ | $K_n$ |  |  | $K_n$ |  | $K_n$ | $K_n$ |
| S2 | $K_n$ |  | $K_n$ | $K_n$ |  |  | $K_n$ |  |  |  | $K_n$ |  |
| S3 |  |  | $K_n$ | $K_n$ |  |  | $K_n$ |  |  | $K_n$ |  | $K_n$ |

$K_a$  $K_u$  $K_a$  $K_u$  $K_a$

**Europäisches Patentamt**

**EUROPÄISCHER RECHERCHENBERICHT**

Nummer der Anmeldung

EP 02 02 8342

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | MIHAILESCU C ET AL: "Dynamic resource allocation in locally centralized cellular systems" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18. Mai 1998 (1998-05-18), Seiten 1695-1699, XP010288215 ISBN: 0-7803-4320-4 * das ganze Dokument * --- | 1-12 | H04Q7/36 H04Q7/38 |
| X | US 5 442 804 A (TEGTH ULF ET AL) 15. August 1995 (1995-08-15) * Spalte 2, Zeile 51 - Spalte 8, Zeile 54 * --- | 1-12 | |
| X | EP 0 841 826 A (LUCENT TECHNOLOGIES INC) 13. Mai 1998 (1998-05-13) * Seite 2, Zeile 38 - Seite 3, Zeile 5 * * Tabellen 1A,,1B * * Seite 10, Zeile 21-54 * --- | 1-12 | |
| X | US 5 157 709 A (OHTERU YOUICHI) 20. Oktober 1992 (1992-10-20) * Spalte 3, Zeile 33 - Spalte 4, Zeile 33 * * Abbildung 4 * ----- | 1-12 | RECHERCHIERTE SACHGEBIETE (Int.Cl.7) H04Q |

Der vorliegende Recherchenbericht wurde für alle Patentansprüche erstellt

| Recherchenort | Abschlußdatum der Recherche | Prüfer |
|---|---|---|
| DEN HAAG | 27. Mai 2003 | Weinmiller, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                  EP 02 02 8342

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5442804 | A | 15-08-1995 | SE | 465146 | B | 29-07-1991 |
| | | | AT | 125085 | T | 15-07-1995 |
| | | | CA | 2046907 | A1 | 04-09-1990 |
| | | | DE | 69020896 | D1 | 17-08-1995 |
| | | | DE | 69020896 | T2 | 30-11-1995 |
| | | | EP | 0461176 | A1 | 18-12-1991 |
| | | | ES | 2074566 | T3 | 16-09-1995 |
| | | | SE | 8900742 | A | 04-09-1990 |
| | | | WO | 9010341 | A1 | 07-09-1990 |
| EP 0841826 | A | 13-05-1998 | CA | 2216761 | A1 | 08-05-1998 |
| | | | EP | 0841826 | A2 | 13-05-1998 |
| | | | JP | 3245105 | B2 | 07-01-2002 |
| | | | JP | 10155181 | A | 09-06-1998 |
| US 5157709 | A | 20-10-1992 | JP | 2312492 | A | 27-12-1990 |
| | | | GB | 2234142 | A ,B | 23-01-1991 |

EPO FORM P0461

Für nähere Einzelheiten zu diesem Anhang : siehe Amtsblatt des Europäischen Patentamts, Nr.12/82